(19) Europäisches Patentamt
European Patent Office
Office européen des brevets

(11) **EP 3 154 837 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(21) Anmeldenummer: **16744294.6**

(22) Anmeldetag: **15.06.2016**

(51) Int Cl.:
**B60W 40/09** (2012.01)   **B60W 50/00** (2006.01)

(86) Internationale Anmeldenummer:
**PCT/DE2016/200275**

(87) Internationale Veröffentlichungsnummer:
**WO 2016/202336 (22.12.2016 Gazette 2016/51)**

(54) **VERFAHREN UND SYSTEM ZUR BEWERTUNG DER FAHRWEISE EINES FAHRZEUGFÜHRERS MIT EINEM KRAFTFAHRZEUG**

METHOD AND SYSTEM FOR EVALUATING THE DRIVING BEHAVIOUR OF A VEHICLE OPERATOR WITH A MOTOR VEHICLE

PROCÉDÉ ET SYSTÈME D'ÉVALUATION DE LA FAÇON DONT UN CONDUCTEUR DE VÉHICULE CONDUIT UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2015 DE 102015211171**
**13.07.2015 DE 102015213108**

(43) Veröffentlichungstag der Anmeldung:
**19.04.2017 Patentblatt 2017/16**

(73) Patentinhaber: **Init Innovative Informatikanwendungen In Transport Verkehrs- Und Leitsystemen GmbH 76131 Karlsruhe (DE)**

(72) Erfinder:
• **DECKER, Christian**
**76327 Pfinztal (DE)**
• **ANDERER, Simon**
**76337 Waldbronn (DE)**

(74) Vertreter: **Patent- und Rechtsanwälte Ullrich & Naumann PartG mbB Schneidmühlstrasse 21 69115 Heidelberg (DE)**

(56) Entgegenhaltungen:
EP-A1- 2 127 953     EP-A1- 2 343 208
EP-A1- 2 472 490     WO-A1-01/51891
DE-A1- 19 843 395    DE-A1-102004 002 495
DE-A1-102004 036 373  FR-A1- 3 009 261
US-A1- 2013 046 449  US-A1- 2014 162 219

**Beschreibung**

Die Erfindung betrifft ein Verfahren und ein System zur Bewertung der Fahrweise eines Fahrzeugführers mit einem Kraftfahrzeug, insbesondere im öffentlichen Nahverkehr bzw. im innerstädtischen Verkehr, vorzugsweise zur Anwendung bei Fahrzeugflotten. Des Weiteren betrifft die Erfindung ein entsprechendes Computerprogramm.

Verfahren zur Bestimmung und Bewertung der Fahrweise eines Fahrzeugführers sind seit Jahren aus der Praxis bekannt. Im einfachsten Fall handelt es sich hierbei beispielsweise um einen Tachographen. Dieser zeichnet Lenk- und Ruhezeiten, Lenkzeitunterbrechungen, zusätzlich gefahrene Kilometer und die gefahrene Geschwindigkeit des Fahrzeugs auf. Des Weiteren ist ein Tachometer mit Motordrehzahlaufschrieb bekannt. Die von dem Tachographen aufgezeichneten Daten spiegeln das Fahrverhalten des Fahrzeugführers wider und dienen insbesondere zur Kontrolle der Einhaltung von Lenk- und Ruhezeiten.

Aus der DE 100 01 261 A1 ist des Weiteren ein Verfahren zur Fahrweisenbewertung bekannt. Bei dem dort bekannten Verfahren wird zur Bestimmung des Fahrverhaltens bzw. der Fahrweise über eine Fahrzustandsbestimmungseinheit laufend der aktuelle Fahrzustand ermittelt. Als relevante Parameter werden die Fahrzeuggeschwindigkeit, die positive oder negative Fahrzeugbeschleunigung, der Längsabstand zu einem vorausfahrenden Fahrzeug sowie das eventuelle Setzen eines Blinkers erfasst. Das anhand dieser Parameter erfasste Fahrverhalten wird mit einem optimalen Fahrverhalten verglichen, so dass dem Fahrzeugführer Verbesserungsvorschläge in Bezug auf sein Fahrverhalten angezeigt werden können.

Entsprechende Systeme werden beispielsweise bei Fahrzeugflotten von Transportunternehmen eingesetzt, um die Fahrsicherheit zu erhöhen, Kraftstoff sowie die Emission von Kohlendioxid einzusparen und den Verschleiß der Fahrzeuge möglichst gering zu halten.

Bei den aus dem Stand der Technik bekannten Systemen ist problematisch, dass diese aufgrund der aufwändigen Sensorik äußerst kostenintensiv sind. Ein weiterer wesentlicher Nachteil besteht darin, dass sich diese Systeme nicht zur Bewertung des Fahrverhaltens eines Fahrzeugführers eignen, der im öffentlichen Nahverkehr bzw. im innerstädtischen Verkehr tätig ist. Fahrten im öffentlichen Nahverkehr zeichnen sich durch mitunter sehr kurze Intervallfahrten aus, nämlich zwischen zwei Haltestellen. Aufgrund der Verkehrssituation in urbanen Gebieten, die beispielsweise Fußgänger oder das schnelle Ein- und Ausfädeln in einen kontinuierlichen Verkehrsfluss beinhalten, treten bei einer solchen Intervallfahrt in kurzen Abständen wiederholt Beschleunigungs- und Abbremsvorgänge auf. Die aus dem Stand der Technik bekannten Parameter zur Bestimmung des Fahrverhaltens sind für eine solche Verkehrssituation nicht geeignet. Zum Beispiel kann der Kraftstoffverbrauch je nach Verkehrsaufkommen stark differieren, so dass der Fahrzeugführer mit seinem Kraftfahrzeug einen anderen, zum Beispiel einen höheren, Kraftstoffverbrauch erzielt bedingt durch Rahmenbedingungen, die durch den Fahrzeugführer nicht beeinflussbar sind. Folglich ist insbesondere eine faire und objektive Beurteilung eines Fahrzeugführers im Hinblick auf den Kraftstoffverbrauch bedingt durch seine Fahrweise äußerst schwierig oder gar nicht möglich.

Des Weiteren offenbart die DE 10 2004 002 495 A1 ein Betriebsdatenerfassungsverfahren zur Bewertung des Antriebsenergieverbrauchs von motorbetriebenen Kraftfahrzeugen bei Berücksichtigung des Fahrerverhaltens.

DE 10 2004 036 373 A1 offenbart eine Vorrichtung und ein Verfahren zur Diagnose der Leistungsfähigkeit mindestens einer Kraftfahrzeugkomponente, insbesondere einer system- bzw. sicherheitsrelevanten Komponente.

WO 01/51891 A1 offenbart ein Verfahren und eine Vorrichtung zur Bewertung der Fahrweise eines Fahrzeugführers beim Befahren eines Verkehrswegenetzes, zum Beispiel eines Straßenverkehrsnetzes, mit einem entsprechenden Fahrzeug.

DE 198 43 395 A1 offenbart ein Verfahren zur Geschwindigkeits- und/oder Abstandsregelung bei Kraftfahrzeugen.

Ferner sind aus den Druckschriften EP 2 127 953 A1, FR 3 009 261 A1, EP 2 343 208 A1, EP 2 472 490 A1, US 2014/0162219 A1 und US 2013/0046449 A1 Verfahren zur Bewertung der Fahrweise eines Fahrzeugführers mit einem Kraftfahrzeug bekannt.

Der vorliegenden Erfindung liegt die Aufgabe zugrunde, ein Verfahren und ein System zur Bewertung der Fahrweise eines Fahrzeugführers mit einem Kraftfahrzeug der eingangs genannten Art derart auszugestalten und weiterzubilden, dass mit einfachen konstruktiven Mitteln, vorzugsweise ohne dem Erfordernis einer aufwändigen Sensorik, eine Bestimmung bzw. Bewertung der Fahrweise eines Fahrzeugführers, insbesondere in Bezug auf den Kraftstoffverbrauch, möglich ist.

Erfindungsgemäß wird die voranstehende Aufgabe durch die Merkmale des Anspruches 1 gelöst.

In Bezug auf das erfindungsgemäße System ist die voranstehende Aufgabe mit den Merkmalen des Anspruchs 13 gelöst.

Schließlich ist die voranstehende Aufgabe durch die Merkmale des Anspruchs 14 gelöst, wonach ein Computerprogramm mit Programmcode angeben ist, das zur Durchführung des erfindungsgemäßen Verfahrens dient, wenn das Computerprogramm in einem Computer ausgeführt wird.

In erfindungsgemäßer Weise ist zunächst einmal erkannt worden, dass im Hinblick auf eine objektive und aussagekräftige Beurteilung der Fahrweise eines Fahrzeugführers die alleinige Berücksichtigung des Kraftstoffverbrauchs ein schwacher Indikator bzw. ungeeignet ist. In weiter erfindungsgemäßer Weise ist erkannt worden, dass die zu Grunde liegende Aufgabe in raffiniert einfacher Weise durch die Erfassung der Stellung des Gaspedals gelöst werden kann, da dieser Parameter die Fahrweise bzw. das Fahrverhalten des Fahrzeugführers widerspiegelt. Dabei ist erkannt worden, dass dieser Parameter insbesondere bei sehr kurzen Intervallfahrten, wie sie im öffentlichen Nahverkehr bzw. im innerstädtischen Verkehr vorkommen, das Fahrverhalten in idealer Weise beschreibt. Erfindungsgemäß werden dazu der Kraftstoffverbrauch und die Stellung des Gaspedals über den Zeitverlauf hinweg ermittelt, wobei aus den beiden ermittelten Parametern jeweils fahrzeugführerspezifische Kennwerte in Bezug auf eine Fahrt des Fahrzeugsführers abgeleitet bzw. berechnet werden. Die abgeleiteten, fahrzeugführerspezifischen Kennwerte umfassen damit einen Kennwert betreffend den Kraftstoffverbrauch und einen Kennwert betreffend die Gaspedalstellung. Die fahrzeugführerspezifischen Kennwerte werden mit entsprechenden vordefinierten Schwellwerten in Bezug auf Kraftstoffverbrauch und in Bezug auf Gaspedalstellung verglichen, wobei aus dem Vergleich der fahrzeugführerspezifischen Kennwerte mit den Schwellwerten auf die Fahrweise des Fahrzeugführers in Bezug auf die Fahrt geschlossen wird.

Folglich ist mit dem erfindungsgemäßen Verfahren und dem erfindungsgemäßen System sowie mit dem erfindungsgemäßen Computerprogramm auf raffinierte Weise und mit einfachen konstruktiven Mitteln eine Bestimmung bzw. Bewertung der Fahrweise eines Fahrzeugführers im Hinblick auf den Kraftstoffverbrauch möglich, wobei ein weiterer Vorteil des erfindungsgemäßen Verfahrens bzw. des erfindungsgemäßen Systems darin liegt, dass die Stellung des Gaspedals sehr einfach detektierbar ist. Durch das erfindungsgemäße System kann mit geringem apparativem Aufwand die Durchführung des erfindungsgemäßen Verfahrens realisiert werden.

An dieser Stelle sei ausdrücklich darauf hingewiesen, dass der Begriff "Kraftstoff" im weitesten Sinne zu verstehen ist, nämlich als jeglicher Energieträger, der für ein Fahrzeug vorgesehen sein kann. Hierbei kann es sich beispielsweise um Benzin, Diesel, Erdgas, elektrische Energie, Wasserstoff etc. handeln.

Des Weiteren sei angemerkt, dass eine Fahrt eines Fahrzeugführers im Sinne der Fahrt während einer Dienstschicht des Fahrzeugführers, zum Beispiel ein Busfahrer, verstanden werden kann. Somit werden der Kraftstoffverbrauch und die dazugehörigen Gaspedalstellungen ermittelt, die bei einer Fahrt eines Fahrzeugführers im Rahmen seiner Schicht vorkommen.

In vorteilhafter Weise können der ermittelte Kraftstoffverbrauch und die ermittelte Stellung des Gaspedals bzw. die daraus abgeleiteten Kennwerte betreffend den Kraftstoffverbrauch und betreffend die Gaspedalstellung in Beziehung zueinander gesetzt werden. In idealer Weise können somit auch der abgeleitete Kennwert betreffend den Kraftstoffverbrauch und der abgeleitete Kennwert betreffend die Gaspedalstellung in Beziehung zu einander gesetzt werden. Folglich ist durch die direkte Kopplung der beiden die Fahrweise beschreibenden Parameter bzw. durch deren Darstellung auf raffiniert einfache Weise eine objektive und aussagekräftige Analyse der Fahrweise eines Fahrzeugführers mit einem Kraftfahrzeug möglich. Des Weiteren können anhand dieser Darstellung dem Fahrzeugführer Verbesserungsvorschläge zur Einsparung von Kraftstoff, nämlich durch Optimierung seiner Fahrweise, vorgeschlagen werden.

In weiter vorteilhafter Weise können zur Ermittlung der die Fahrweise beschreibenden Parameter, insbesondere der Parameter betreffend den Kraftstoffverbrauch und der Parameter betreffend die Gaspedalstellung, bzw. zur Berechnung der Kennwerte aus den ermittelten Parametern nur vordefinierte Fahrtabschnitte der Fahrt berücksichtigt werden. Dabei sei angemerkt, dass ein Fahrtabschnitt einer Fahrt ein Zeitintervall der Fahrt betrifft, bei dem das Fahrzeug im Wesentlichen in Bewegung ist. Damit können typische Intervallfahrten während einer Fahrt bzw. während einer Dienstschicht eines Fahrzeugführers, zum Beispiel ein Busfahrer, berücksichtigt werden. Standzeiten, Pausen und/oder Leerlauf-Aktivitäten des Fahrzeugs sollen hierbei möglichst keine Berücksichtigung finden. Die Route eines Fahrzeugführers ist bereits im Vorfeld bekannt, so dass geeignete Fahrtabschnitte im Vorfeld festgelegt werden können. Somit können aussagekräftige und die Fahrweise des Fahrzeugführers in idealerweise beschreibende Parameterdaten gewonnen werden. Dies ermöglicht die Gewinnung bzw. das Filtern von verhaltensbezogenen Kraftstoffverbrauchsdaten.

In besonders vorteilhafter Weise können die vordefinierten Fahrtabschnitte eine Fahrtabschnittsdauer von höchstens 15 Minuten aufweisen, vorzugsweise von höchstens 5 Minuten, besonders vorzugsweise von höchstens 2 Minuten, ganz besonders vorzugsweise von höchstens 1 Minute aufweisen. Des Weiteren können die vordefinierten Fahrtabschnitte idealerweise dazu eine Fahrtabschnittsdauer von mindestens 20 Sekunden aufweisen. Somit können zweckmäßigerweise relativ kurze Intervallfahrten zur Ermittlung der Parameter bzw. der Kennwerte berücksichtigt werden, die optimal unterschiedliche Verhaltensweisen in der Fahrweise von Fahrzeugführern bei Beschleunigungs- und Abbremsvorgängen widerspiegeln. Folglich kann durch die gemeinsame Ermittlung und Berücksichtigung von Kraftstoffverbrauch und zugehöriger Gaspedalstellung effektiv die Fahrweise des Fahrzeugführers detektiert und analysiert werden.

Hinsichtlich der Bestimmung von möglichst aussagekräftigen Werten kann die Fahrt bzw. können die ggf. aggregierten Fahrtabschnitte in Summe eine Fahrzeit von mindestens 30 Minuten aufweisen. Somit kann insbesondere für die Berechnung des Kraftstoffverbrauchs für die Fahrt ein zuverlässiger Verbrauchswert gewonnen werden. Die Fahrzeit von mindestens 30 Minuten kann dabei auf mehrere kürzere Fahrtabschnitte verteilt sein. Noch bessere und stabilere Kraftstoffverbrauchswerte lassen sich gewinnen, wenn die Fahrt eine Fahrzeit von mindestens 60 Minuten aufweist. Somit kann die ggf. zu starke Gewichtung von Ausreißern für die gewonnenen Daten über eine Fahrt des Fahrzeugführers, insbesondere in Bezug auf den Kraftstoffverbrauch, vermieden werden.

Hinsichtlich der Bestimmung eines geeigneten charakteristischen Werts für eine Fahrt zur Verwendung im Rahmen des Vergleichsvorgangs bzw. der Vergleichsoperation kann als fahrzeugführerspezifischer Kennwert betreffend den Kraftstoffverbrauch der durchschnittliche Kraftstoffverbrauch des Fahrzeugführers für eine bzw. für die Fahrt berechnet werden. Somit kann mit einem derart gewählten Kennwert im Rahmen des Vergleichs mit einem vordefinierten Schwellwert die Fahrweise einer Fahrt in Bezug auf den Kraftstoffverbrauch - idealerweise dabei gekoppelt mit dem Vergleich des entsprechenden Kennwertes betreffend die Gaspedalstellung mit dem dafür vorgesehenen vordefinierten Schwellwert - auf geeignete und objektive Weise bestimmt und bewertet werden. Dies ermöglicht auf raffinierte Weise - und bei verhältnismäßig geringem Aufwand - die Feststellung, inwieweit sich die Fahrweise des Fahrzeugführers auf den Kraftstoffverbrauch auswirkt.

Hinsichtlich der Bestimmung eines geeigneten charakteristischen Werts für eine Fahrt zur Verwendung in der Vergleichsoperation kann als fahrzeugführerspezifischer Kennwert betreffend die Gaspedalstellung die Häufigkeit einer vorgebbaren Betätigungsstärke des Gaspedals herangezogen werden. In vorteilhafter Weise kann hierzu die relative Häufigkeit einer vorgebbaren Betätigungsstärke des Gaspedals berechnet werden. Dabei kann es sich bei dem Schwellwert um die Häufigkeit einer vorgebbaren Mindestbetätigungsstärke des Gaspedals handeln. Die die Mindestbetätigungsstärke liegt vorzugsweise im Bereich von einer 50 bis 100-prozentigen Betätigung des Gaspedals. Besonders vorzugsweise liegt die die Mindestbetätigungsstärke im Bereich von einer 50 bis 75-prozentigen Betätigung des Gaspedals. Ganz besonders vorzugsweise liegt die Mindestbetätigungsstärke im Bereich von einer 50 bis 60-prozentigen Betätigung des Gaspedals. Somit kann zur Berechnung des Kennwertes betreffend die Gaspedalstellung zum Beispiel die absolute und/oder relative Häufigkeit ermittelt werden, mit der das Gaspedal beispielsweise um zumindest 70 Prozent betätigt ist oder um zumindest 50 Prozent betätigt ist. Damit kann besonders einfach die Fahrweise eines Fahrzeugführers bewertet werden, da derartig starke Betätigungen bzw. Stellungen des Gaspedals einen höheren Kraftstoffverbrauch verursachen.

Hinsichtlich der Festlegung eines geeigneten Schwellwerts für die Vergleichsoperation kann als Schwellwert betreffend den Kraftstoffverbrauch der Durchschnitt der durchschnittlichen Kraftstoffverbrauchswerte einer vorgebbaren Menge von Fahrzeugführern berechnet bzw. festgelegt werden. Zum Beispiel eignet sich dazu in vorteilhafter Weise der Durchschnitt der unterhalb des 70%-Quantils liegenden Kraftstoffverbrauchswerte der Fahrzeugführer. Besonders bevorzugt kann der Durchschnitt der unterhalb des 60%-Quantils liegenden Kraftstoffverbrauchswerte der Fahrzeugführer gewählt werden. Ganz besonders bevorzugt kann der Durchschnitt der unterhalb des 50%-Quantils liegenden Kraftstoffverbrauchswerte der Fahrzeugführer berechnet werden. Somit erhält man im Rahmen der Vergleichsoperation geeignete Ergebnisse in Abhängigkeit von bereits vorhandenen Daten von Fahrzeugführern, zum Beispiel einer Fahrzeugflotte. Des Weiteren ist der Schwellwert dadurch so gewählt, dass in vorteilhafterweise gewährleistet ist, dass Fahrzeugführer in einer Fahrzeugflotte vorhanden sind, die geringere Kraftstoffverbrauchswerte als der Schwellwert aufweisen, und dass Fahrzeugführer in der Fahrzeugflotte vorhanden sind, die höhere Verbrauchswerte aufweisen. Folglich werden keine beliebigen und unrealistischen Schwellwerte vorgegeben, die für einen Fahrzeugführer nahezu unerreichbar scheinen.

Des Weiteren ist denkbar, dass als Schwellwert betreffend die Gaspedalstellung der Durchschnitt der, vorzugsweise relativen, Häufigkeiten einer vorgebbaren Betätigungsstärke bzw. Mindestbetätigungsstärke des Gaspedals berechnet bzw. festgelegt wird. Dabei handelt es sich um absolute und/oder relative Häufigkeiten von vorgebbaren Gaspedalstellungen bzw. vorgebbaren Betätigungsstärken aus der Verteilung der relativen Häufigkeit aller Gaspedalstellungen, die zu den Fahrten bzw. die zu den aus den Fahrten ermittelten Kraftstoffverbrauchswerten von Fahrzeugführern gehören, die bei der Berechnung des Schwellwerts betreffend den Kraftstoffverbauch berücksichtigt werden. Die zu berücksichtigende Mindestbetätigungsstärke kann in vorteilhafter Weise im Bereich von einer 50 bis 100-prozentigen Betätigung des Gaspedals liegen. Besonders bevorzugt kann die Mindestbetätigungsstärke des Gaspedals im Bereich von einer 50 bis 75-prozentigen Betätigung des Gaspedals liegen, ganz besonders vorzugsweise im Bereich von einer 50 bis 60-prozentigen Betätigung des Gaspedals.

Hinsichtlich einer vorteilhaften und einfachen Bewertung kann anhand des Vergleichs der Kennwerte mit den entsprechenden Schwellwerten die Fahrweise des Fahrzeugführers für die Fahrt bzw. für eine Fahrt entweder als verbesserungswürdig oder als nicht verbesserungswürdig klassifiziert werden.

Zur Bereitstellung einer umfassenden Bewertung der Fahrweise des Fahrzeugführers können die die Fahrweise beschreibenden Parameter für mehrere Fahrten des Fahrzeugführers ermittelt werden, wobei für jede Fahrt ein fahrzeugführerspezifischer Kennwert betreffend den Kraftstoffverbrauch und ein fahrzeugführerspezifischer Kennwert betreffend die Gaspedalstellung abgleitet bzw. berechnet wird.

In vorteilhafter Weise kann eine, vorzugsweise dichotome, Klassifizierung mehrerer Fahrten des Fahrzeugführers mittels eines Hypothesentests, insbesondere mittels eines Binomialtests, überprüft werden, wobei aus der Überprüfung auf die Bewertung der Fahrweise des Fahrzeugführers geschlossen werden kann. Somit ist eine stabile und zuverlässigere Bestimmung und Bewertung des Fahrzeugführers in Bezug auf seine Fahrweise über mehrere Fahrten oder Dienstschichten hinweg realisiert.

In besonders vorteilhafter Weise kann mit dem Hypothesentest ermittelt werden, ob der Fahrzeugführer mit einer Wahrscheinlichkeit $p \geq 0,5$ eine Fahrt mit einer nicht verbesserungswürdigen Fahrweise fährt. Damit ist auf raffinierte Weise ermittelbar, ob - bei festgelegtem Signifikanzniveau von zum Beispiel 0,1 - mehr als nur zufällig eine nicht verbesserungswürdige, d. h. eine akzeptable, Fahrt fährt bzw. Fahrweise aufweist.

Zur Erreichung einer weiteren Verbesserung bzw. um auf verbesserte Fahrweisen von Fahrzeugführern, zum Beispiel innerhalb einer Fahrzeugflotte, zu reagieren, können die Schwellwerte neu berechnet und/oder aktualisiert werden, wenn die Fahrweise eines vorgebbaren Anteils der Fahrzeugführer als nicht verbesserungswürdig bewertet wird. Somit werden die Schwellwerte für die Vergleichsoperation aktualisiert bzw. nachjustiert, so dass Verbesserungen der Fahrweisen von Fahrzeugführern Berücksichtigung finden. Des Weiteren ist dies auch in umgekehrter Weise denkbar, nämlich falls sich die Fahrweisen von Fahrzeugführern verschlechtern, zum Beispiel da die Schwellwerte für die Fahrzeugführer einer Fahrzeugflotte zu streng gewählt sind.

Des Weiteren sei darauf hingewiesen, dass die zuvor erörterten Merkmale zu dem erfindungsgemäßen Verfahren und/oder zu den vorteilhaften Ausgestaltungen auch eine vorrichtungsgemäße Ausprägung repräsentieren können. Eine Kombination dieser Merkmale mit den die Systemansprüche betreffenden Merkmalen ist nicht nur möglich, sondern von Vorteil.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1          in schematischer Ansicht ein Ablaufdiagramm eines Ausführungsbeispiels eines erfindungsgemäßen Verfahrens,

Fig. 2          die über den Zeitverlauf ermittelte Geschwindigkeit sowie den über den Zeitverlauf ermittelten Kraftstoffverbrauch eines ersten Fahrzeugführers,

Fig. 3          die über den Zeitverlauf ermittelte Geschwindigkeit sowie den über den Zeitverlauf ermittelten Kraftstoffverbrauch eines zweiten Fahrzeugführers,

Fig. 4          das Schaubild gemäß Fig. 2, wobei zusätzlich die über den Zeitverlauf ermittelte Stellung des Gaspedals aufgetragen ist,

Fig. 5          das Schaubild gemäß Fig. 3, wobei zusätzlich die über den Zeitverlauf ermittelte Stellung des Gaspedals aufgetragen ist,

Fig. 6          die Verteilung der relativen Häufigkeit der unterschiedlich starken Betätigungen des Gaspedals der in Fig. 4 dargestellten Kurve,

Fig. 7          die Verteilung der relativen Häufigkeit der unterschiedlich starken Betätigungen des Gaspedals der in Fig. 5 dargestellten Kurve,

Fig. 8a, 8b, 8c  beispielhafte Verteilungen der relativen Häufigkeit von verschieden starken Betätigungen des Gaspedals während einer Fahrt bzw. Dienstschicht eines Fahrzeugführers und die dazugehörigen Kraftstoffverbrauchswerte,

Fig. 9          ein Diagramm zur Veranschaulichung eines implementierten Bewertungsprozesses gemäß einem Ausführungsbeispiel des erfindungsgemäßen Verfahrens bzw. des erfindungsgemäßen Systems, und

Fig. 10         das Diagramm gemäß Fig. 9, wobei gemäß einem Ausführungsbeispiel des erfindungsgemäßen Verfahrens bzw. des erfindungsgemäßen Systems Fahrten im Hinblick auf verbesserungswürdig oder nicht verbesserungswürdig klassifiziert werden.

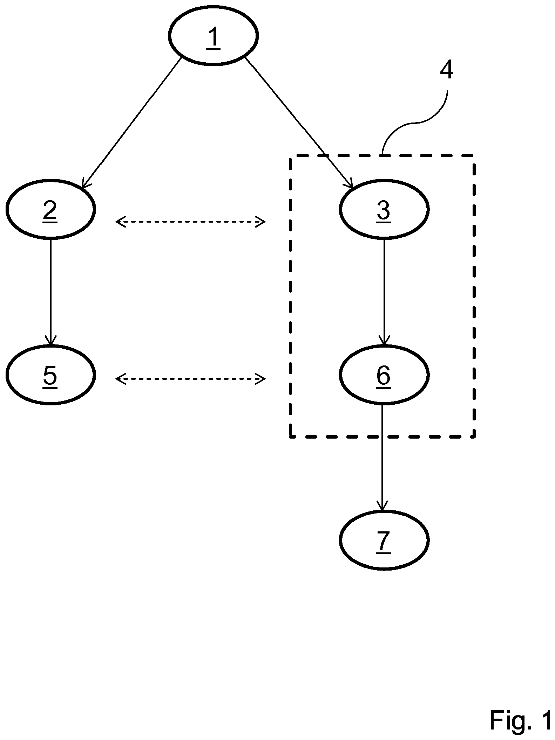

Fig. 1 zeigt in schematischer Ansicht ein Ablaufdiagramm eines Ausführungsbeispiels eines erfindungsgemäßen Verfahrens. Dabei wird zunächst von einer Detektionseinrichtung 1 über Mittel zur Ermittlung der Gaspedalstellung, zum Beispiel ein induktiver oder kapazitiver Bewegungs- und/oder Abstandssensor, die Stellung des Gaspedals über den Zeitverlauf hinweg detektiert. Des Weiteren detektiert die Detektionseinrichtung 1 über entsprechende weitere Mittel bzw. Sensoren den Kraftstoffverbrauch über den Zeitverlauf hinweg. Von der Detektionseinrichtung 1 können ggf. über entsprechende Mittel auch weitere Parameter detektiert werden, anhand derer sich das Fahrverhalten des Fahrzeugführers, ggf. ergänzend, bestimmen lässt. Die durch die Detektionseinrichtung 1 detektierten Daten werden in einer Speichereinheit 2 des Kraftfahrzeugs abgespeichert und/oder an eine Speichereinheit 3 eines zentralen - externen - Rechners 4 übermittelt. Die Übermittlung kann in bevorzugter Weise drahtlos - über ein Mobilfunknetz oder über W-LAN - und ggf. in Echtzeit erfolgen.

Die in der internen Speichereinheit 2 gespeicherten Daten können von einer, beispielsweise im Fahrzeug angeordneten, Recheneinheit 5 weiterverarbeitet werden. In gleicher Weise können die in der Speichereinheit 3 abgespeicherten Daten von einer Recheneinheit 6 des zentralen Rechners 4 weiterverarbeitet werden. Die Weiterverarbeitung erfolgt dabei derart, dass aus den Daten das Fahrverhalten des Fahrzeugführers vorzugweise nach einer beendeten Fahrt oder Dienstschicht über eine Bewertungseinrichtung bestimmt bzw. bewertet wird.

Der zentrale Rechner 4, umfassend die Speichereinheit 3 und die Recheneinheit 6, fungiert dabei als Bewertungseinrichtung zur Bewertung der Fahrweise eines Fahrzeugführers. Alternativ oder zusätzlich können auch die Speichereinheit 2 und die Recheneinheit 5 als eine - im Kraftfahrzeug angeordnete - Bewertungseinrichtung fungieren. Die Bewertungseinrichtung kann auch verteilt ausgebildet sein, so dass die Bewertungseinrichtung einerseits durch den zentralen Rechner 4 realisiert ist und Teilfunktionalitäten der Bewertungseinrichtung im Kraftfahrzeug angeordnet sind oder umgekehrt. Zwischen der Speichereinheit 2 bzw. der Recheneinheit 5 und dem zentralen Rechner 4 kann ggf. eine Datenkommunikation erfolgen, insbesondere im Rahmen der Weiterverarbeitung der gesammelten Parameterdaten.

Die Bewertungseinrichtung ist derart konfiguriert und ausgebildet, dass sie aus den ermittelten Parametern fahrzeugführerspezifische Kennwerte für eine Fahrt des Fahrzeugführers berechnet. Die fahrzeugführerspezifischen Kennwerte vergleicht die Bewertungseinrichtung mit vordefinierten Schwellwerten, wobei die Bewertungseinrichtung aus dem Vergleich der fahrzeugführerspezifischen Kennwerte mit den Schwellwerten auf die Fahrweise des Fahrzeugführers für die Fahrt schließt.

Die weiterverarbeiteten Daten, insbesondere das Bewertungsergebnis für die Fahrweise des Fahrzeugführers, können auf einer, vorzugsweise externen, Anzeige 7 über den zentralen Rechner 4 angezeigt werden.

Mit der Anzeige 7 kann dem Fahrzeugführer sein persönlicher Fahrerindex angezeigt werden, der die Entwicklung, beispielsweise eine Verbesserung oder Verschlechterung, der Fahrweise bzw. des Fahrverhaltens über mehrere Fahrten hinweg repräsentiert. Es kann eine Bewertung der einzelnen Fahrer einer Fahrzeugflotte eines Transportunternehmens angezeigt werden, die auf der Kraftstoffeffizienz der Fahrer - bedingt durch deren Fahrweise - beruht. Die Bewertung kann für eine Fahrt bzw. eine Dienstschicht des Fahrzeugführers gelten, so dass die Entwicklung der Fahrweise eines Fahrzeugführers über mehrere Dienstschichten hinweg analysierbar ist.

Die gesamte Kraftstoffeffizienz innerhalb einer Fahrzeugflotte eines Transport- bzw. Verkehrsunternehmens kann verbessert werden, indem den Fahrzeugführern bestimmte Ziele gesetzt werden, um die Fahrzeugführer hinsichtlich einer Verbesserung ihrer Bewertung zu motivieren. Des Weiteren sind tägliche, wöchentliche, monatliche, etc., Berichte oder Analysen über die Kraftstoffeffizienz eines Fahrzeugführers zur laufenden und erfolgreichen Auswertung denkbar. Somit können sowohl umweltschonende Aspekte als auch erhebliche Ressourcen- und Kosteneinsparungen erreicht werden.

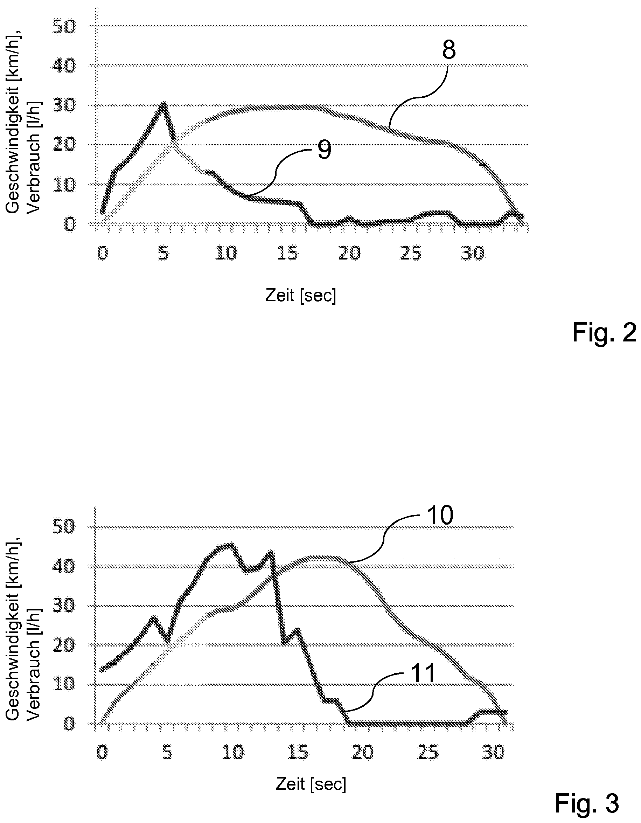

Fig. 2 zeigt die über den Zeitverlauf ermittelte Geschwindigkeit sowie den über den Zeitverlauf ermittelten Kraftstoffverbrauch eines ersten Fahrzeugführers. Dazu sind in einer ersten Kurve 8 die Geschwindigkeit in km/h gegen die Zeit t in Sekunden und in einer zweiten Kurve 9 der Kraftstoffverbrauch in l/h gegen die Zeit t in Sekunden aufgetragen.

Aus Fig. 2 wird deutlich, dass es sich um den typischen Verlauf einer Intervallfahrt handelt, wie sie zwischen zwei Haltestellen einer Buslinie stattfindet. Diese ist durch eine relativ kurze Fahrzeit von lediglich ca. 35 Sekunden geprägt, in der das Fahrzeug zunächst bis auf ca. 30 km/h stark beschleunigt, wobei diese Geschwindigkeit nur für ca. 8 Sekunden gehalten wird und sodann das Fahrzeug bereits wieder seine Geschwindigkeit verringert, um schließlich an der nächsten Haltestelle anzuhalten. Bei dem in Fig. 2 gezeigten Diagramm liegt der Kraftstoffverbrauch für diese Intervallfahrt bei ca. 0,064 Litern.

Fig. 3 zeigt die über den Zeitverlauf ermittelte Geschwindigkeit sowie den über den Zeitverlauf ermittelten Kraftstoffverbrauch eines zweiten Fahrzeugführers, wobei die Fahrstrecke identisch ist zu der Fahrtstrecke, die Fig. 2 zugrunde liegt. Dazu sind in einer dritten Kurve 10 die Geschwindigkeit in km/h gegen die Zeit t in Sekunden und in einer vierten Kurve 11 der Kraftstoffverbrauch in l/h gegen die Zeit t in Sekunden aufgetragen.

Die Fahrtzeit, die der zweite Fahrzeugführer benötigt, ist nur unwesentlich kürzer als die in Fig. 2 dargestellte Fahrtzeit, beträgt nämlich 32 Sekunden. Dabei ist wesentlich, dass die erste Kurve 8 und die dritte Kurve 10 lediglich geringfügig voneinander abweichen, insbesondere im Bereich zwischen 0 Sekunden und 8 Sekunden im Wesentlichen einander entsprechen.

Jedoch ist der Kraftstoffverbrauch in Fig. 3 im Gegensatz zu Fig. 2 ca. doppelt so hoch, liegt nämlich für diese Intervallfahrt bei ca. 0,144 Litern. Aus dem Vergleich der Fig. 2 und 3 wird deutlich, dass sich die über den Zeitverlauf ermittelte Geschwindigkeit bei Intervallfahrten nicht als Parameter zu Bestimmung des Fahrverhaltens eignet.

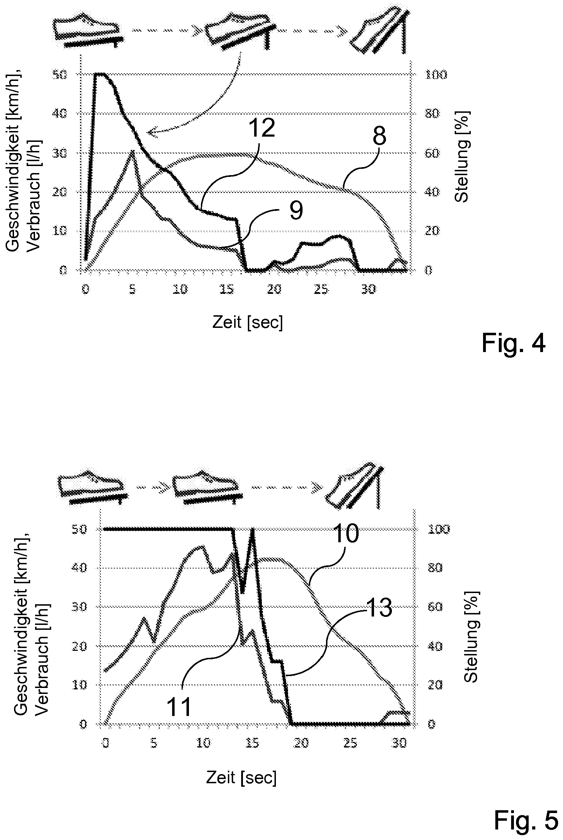

Fig. 4 zeigt das Schaubild gemäß Fig. 2, wobei zusätzlich die über den Zeitverlauf ermittelte Stellung des Gaspedals als fünfte Kurve 12 aufgetragen ist. Die Stellung des Gaspedals ist in Prozent angegeben, wobei 100% der Stellung eines vollständig betätigten und 0% der Stellung eines vollständig unbetätigten Gaspedals entspricht.

Fig. 5 zeigt das Schaubild gemäß Fig. 3, wobei auch hier zusätzlich die über den Zeitverlauf ermittelte Stellung des Gaspedals als sechste Kurve 13 aufgetragen ist.

Der Vergleich der fünften Kurve 12 aus Fig. 4 und der sechsten Kurve 13 aus Fig. 5 zeigt, dass diese über den gesamten Zeitverlauf signifikant von einander abweichen, insbesondere auch im Bereich zwischen 0 Sekunden und 8 Sekunden. Dadurch wird deutlich, dass sich die Stellung des Gaspedals über den Zeitverlauf hinweg in idealer Weise als Parameter zur Bestimmung des Fahrverhaltens eignet.

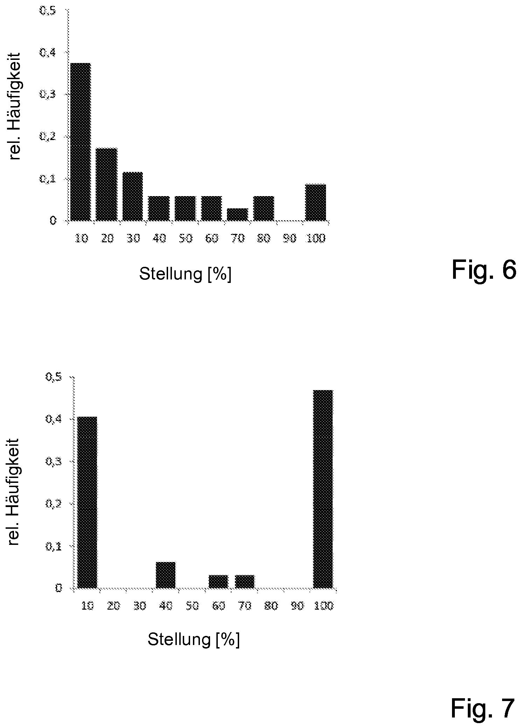

Fig. 6 zeigt die Verteilung der relativen Häufigkeit der verschieden starken Betätigungen des Gaspedals der in Fig. 4 dargestellten fünften Kurve 12. Fig. 7 zeigt die Verteilung der relativen Häufigkeit der verschieden starken Betätigungen des Gaspedals der in Fig. 5 dargestellten sechsten Kurve 13.

Der Vergleich der Fig. 6 und 7 macht nochmals deutlich, dass der erste Fahrzeugführer und der zweite Fahrzeugführer das Gaspedal extrem unterschiedlich betätigen, wobei nämlich der zweite Fahrzeugführer gemäß Fig. 7 deutlich häufiger das Gaspedal vollständig betätigt, d. h. komplett "durchtritt". Anhand der Fig. 6 und 7 ist das unterschiedliche Fahrverhaltend des ersten Fahrzeugführers und des zweiten Fahrzeugführers sehr deutlich sichtbar. Dadurch ist gezeigt, dass sich die Stellung des Gaspedals über den Zeitverlauf hinweg in idealer Weise als Parameter zur Bestimmung des Fahrverhaltens eignet. Ferner ist die Stellung des Gaspedals durch eine äußerst simple Sensorik detektierbar.

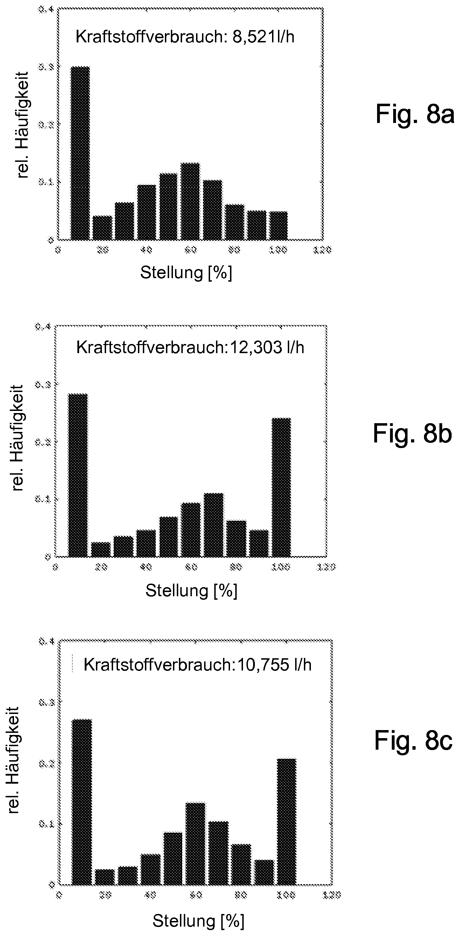

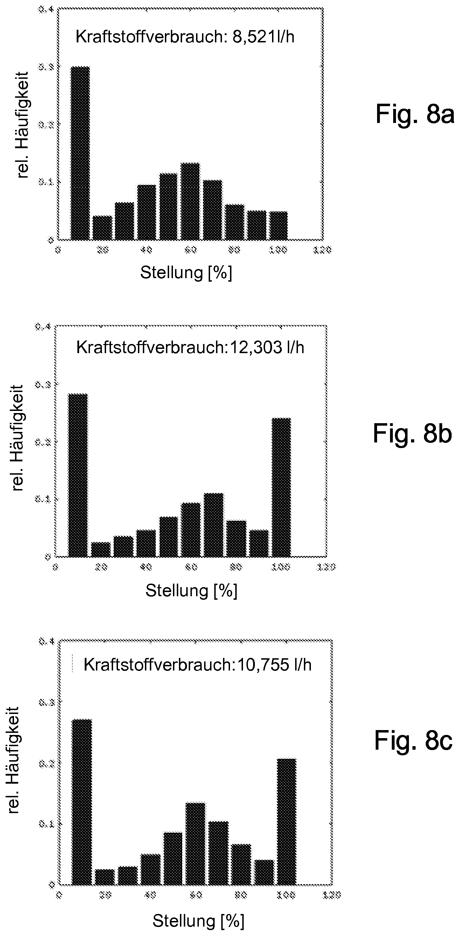

Fig. 8a, 8b und 8c zeigen jeweils die Verteilung der relativen Häufigkeit von verschieden starken Betätigungen des Gaspedals während einer Fahrt bzw. Dienstschicht eines Fahrzeugführers und den dazugehörigen Kraftstoffverbrauchswert. Die waagrechte Achse beschreibt die Stellung des Gaspedals in Prozent und in Richtung der vertikalen Achse ist die relative Häufigkeit der jeweiligen Gaspedalstellungen angegeben. Der durchschnittliche Kraftstoffverbrauch zu der Fahrt gemäß Fig. 8a beträgt 8,521 l/h. Der durchschnittliche Kraftstoffverbrauch zu der Fahrt gemäß Fig. 8b beträgt 12,303 l/h. Der durchschnittliche Kraftstoffverbrauch zu der Fahrt gemäß Fig. 8c beträgt 10,755 l/h.

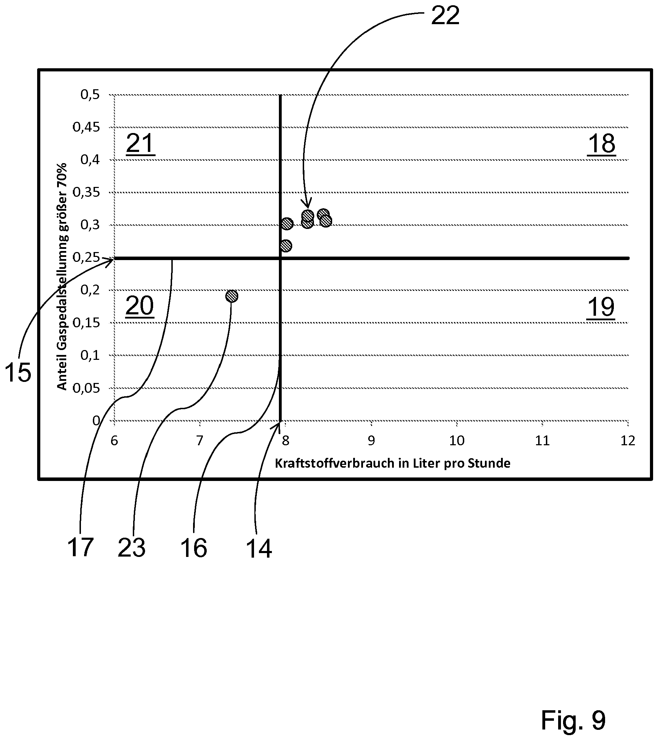

Fig. 9 zeigt ein Diagramm zur Veranschaulichung des implementierten Bewertungsprozesses gemäß einem Ausführungsbeispiel des erfindungsgemäßen Verfahrens bzw. des erfindungsgemäßen Systems. Der Fahrzeugführer wird sowohl über seinen Kraftstoffverbrauch als auch über sein Nutzungsverhalten in Bezug auf das Gaspedal bewertet. In dem Diagramm gemäß Fig. 9 ist der Anteil einer Gaspedalstellung größer als 70 % eines Fahrzeugführers für eine Fahrt (vertikale Achse), d. h. die relative Häufigkeit einer mindestens 70-prozentigen Betätigung des Gaspedals eines Fahrzeugführers für eine Fahrt bzw. Dienstschicht, gegenüber dem durchschnittlichen Kraftstoffverbrauch in Liter pro Stunde des Fahrzeugführers für die Fahrt/Dienstschicht (waagrechte Achse) aufgetragen.

Des Weiteren sind in Fig. 9 die vordefinierten Schwellwerte zur Klassifizierung im Rahmen des Vergleichsoperation dargestellt, nämlich der Schwellwert 14 betreffend den Kraftstoffverbrauch und der Schwellwert 15 betreffend die Gaspedalstellung. Schwellwert 14 ist durch die Schwellwertlinie 16 visualisiert. Schwellwert 15 ist durch die Schwellwertlinie 17 visualisiert. Für den Schwellwert 14 betreffend den Kraftstoffverbrauch werden die durchschnittlichen Kraftstoffverbrauchswerte von Fahrzeugführern einer Fahrzeugflotte für eine Fahrt bzw. für eine Dienstschicht berücksichtigt, wobei hier konkret als Schwellwert 14 der Durchschnitt der unterhalb des 50%-Quantils liegenden durchschnittlichen Kraftstoffverbrauchswerte der Fahrzeugführer der Fahrzeugflotte festgelegt ist. Als Schwellwert 15 betreffend die Gaspedalstellung ist der Durchschnitt der relativen Häufigkeit einer mindestens 70-prozentigen Betätigung des Gaspedals festgelegt.

Die im Vorfeld erzeugten Schwellwerte 14 und 15 unterteilen über die entsprechenden Schwellwertlinien 16 und 17 das Schaubild in vier Bereiche 18, 19, 20 und 21. Punkte links von der Schwellwertlinie 16 repräsentieren Fahrten oder Dienstschichten eines Fahrzeugführers mit einem hinreichend guten Kraftstoffverbrauchskennwert im Vergleich zu dem Schwellwert 14. Punkte rechts von der Schwellwertlinie 16 repräsentieren Fahrten oder Dienstschichten eines Fahrzeugführers mit zu hohem Kraftstoffverbrauchskennwert im Vergleich zu dem vordefinierten Schwellwert 14. Punkte unterhalb der Schwellwertlinie 17 repräsentieren Fahrten oder Dienstschichten eines Fahrzeugführers mit einem hinreichend guten Gaspedalstellungskennwert im Vergleich zu dem vordefinierten Schwellwert 15. Punkte oberhalb der Schwellwertlinie 17 repräsentieren Fahrten oder Dienstschichten eines Fahrzeugführers mit einem zu hohen Gaspedalstellungskennwert.

Die Punkte 22 und der Punkt 23 repräsentieren mehrere Fahrten bzw. Dienstschichten eines Fahrzeugführers entsprechend der abgeleiteten und berechneten Kennwerte für die jeweilige Fahrt. Insgesamt sind sieben Fahrten eines Fahrzeugführers in dem in Fig. 9 dargestellten Diagramm eingetragen. Die beiden entsprechenden Kennwerte für die in Fig. 9 durch einen Punkt repräsentierten Fahrten können aus den Verteilungen der relativen Häufigkeit von verschieden starken Betätigungen des Gaspedals während einer Fahrt bzw. während einer Dienstschicht eines Fahrzeugführers und dem dazugehörigen Kraftstoffverbrauchswert, vgl. zum Beispiel Fig. 6, 7, 8a, 8b und 8c, gewonnen werden.

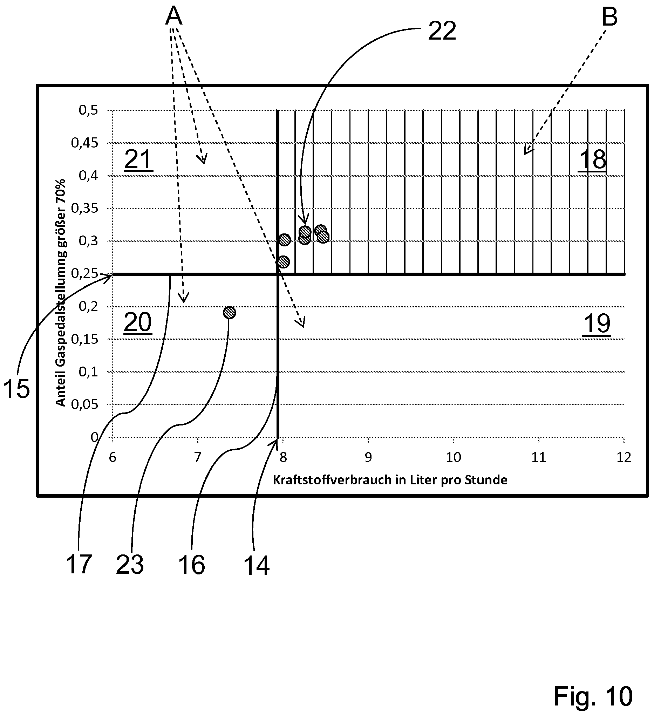

Fig. 10 zeigt das Diagramm gemäß Fig. 9, wobei die Bereiche 18, 19, 20 und 21 derart aufgeteilt werden, dass ein "Treffer-Bereich" A und ein "Kein-Treffer-Bereich" B gebildet sind. Ein Treffer in dem Treffer-Bereich A entspricht einer nicht verbesserungswürdigen Fahrt bzw. Dienstschicht eines Fahrzeugführers, da unter Berücksichtigung der

7

vordefinierten Schwellwerte betreffend Kraftstoffverbrauch und Gaspedalstellung ein hinreichend guter Kennwert für den Kraftstoffverbrauch oder ein hinreichend guter Kennwert für die Gaspedalstellung in Bezug auf diese Fahrt vorliegt bzw. ermittelt worden ist. Der Treffer-Bereich A umfasst somit die Bereiche 19, 20 und 21. Der Kein-Treffer-Bereich umfasst den Bereich 18. Ein Treffer ist in Fig. 10 durch den Punkt 21 repräsentiert. Die durch die Punkte 22 repräsentierten Fahrten gemäß Fig. 10 fallen in den Kein-Treffer-Bereich B, da sie aufgrund der vordefinierten bzw. im Vorfeld festgelegten Schwellwerte 14 und 15 einen zu schlechten Kraftstoffverbrauch bzw. einen zu schlechten Kraftstoffverbrauchskennwert und zu häufig hohe Gaspedalstellungen, d. h. zu häufig starke Gaspedalbetätigungen, bzw. einen zu hohen Gaspedalstellungskennwert aufweisen. Somit sind die Fahrten zu den Punkten 22 als verbesserungswürdig eingestuft. Die Fahrt zu dem Punkt 23 ist als nicht verbesserungswürdig eingestuft.

Folglich repräsentiert der Treffer-Bereich A Fahrten eines Fahrzeugführers mit ausreichender Kraftstoffeffizienz, wobei sich die Fahrweise des Fahrzeugführers für eine solche Fahrt durch einen niedrigen Kraftstoffverbrauch und/oder durch hauptsächlich niedrige Gaspedalstellungen auszeichnet. Der Kein-Treffer-Bereich B repräsentiert Fahrten eines Fahrzeugführers mit nicht ausreichender Kraftstoffeffizienz, wobei die Fahrweise des Fahrzeugführers für eine solche Fahrt einen hohen Kraftstoffverbrauch und häufig hohe Gaspedalstellungen aufweist. Somit ist für eine akzeptable bzw. nicht verbesserungswürdige Fahrt möglich, dass die Häufigkeit von Gaspedalstellungen höher sein darf als der entsprechende Schwellwert 15, wenn der zugehörige Kraftstoffverbrauch niedriger als der entsprechende Schwellwert 14 ist. Des Weiteren darf der Kraftstoffverbrauch höher sein als der entsprechende Schwellwert 14, wenn die relative Häufigkeit der zugehörigen Gaspedalstellungen niedriger als der Schwellwert 15 ist.

Die Klassifizierung der sieben Fahrten eines Fahrzeugführers gemäß Fig. 9 werden mittels eines Binomialtests überprüft, um zu ermitteln, ob der Fahrzeugführer - grundsätzlich über mehre Fahrten hinweg - eine akzeptable, d. h. nicht verbesserungswürdige, Fahrweise hat oder ob der Fahrzeugführer eine mangelhafte Fahrweise aufweist. Dazu wird folgende Nullhypothese implementiert:

### Nullhypothese $H_0$:

Für die Wahrscheinlichkeit $p$ eines Treffers gilt: $p \geq 0{,}5$.

Somit gilt als alternative Hypothese:

### Alternativhypothese $H_1$:

Für die Trefferwahrscheinlichkeit gilt: $p < 0{,}5$

Bei Ablehnen der Nullhypothese ist es damit plausibel, dass der getestete Fahrzeugführer mit einer Wahrscheinlichkeit von $(1-p) > 0{,}5$ (also größer als Zufall) eine verbesserungswürdige Fahrt bzw. Dienstschicht fährt. Das bedeutet, dass bei Ablehnen der Nullhypothese die Fahrweise bzw. das Fahrverhalten des Fahrzeugführers als verbesserungswürdig anzusehen ist. Falls die Nullhypothese nicht abgelehnt wird, so ist die Fahrweise bzw. das Fahrverhalten des Fahrzeugführers ausreichend bzw. nicht verbesserungswürdig.

Im Rahmen des gemäß Fig. 10 illustrierten Ausführungsbeispiel eines erfindungsgemäßen Verfahrens ist mit den voranstehenden Hypothesen ein linksseitiger Binomialtest implementiert. Die Zufallsvariable X entspricht der Anzahl der Treffer in der zu testenden Stichprobe mit einem Stichprobenumfang $n = 7$.

Unter der Nullhypothese $N_0 : p \geq 0{,}5$ ($\Leftrightarrow p_0 = 0{,}5$) ist die Teststatistik binominalverteilt, also gilt:

$$\mathrm{P}\,(X = k) = \mathrm{B}(k\,|\,p_0,n) = \binom{n}{k} \cdot p_0^{\,k}(1 - p_0)^{n-k}$$

Da die Teststatistik diskret verteilt ist, kann ein gegebenes Signifikanzniveau $\alpha$ im Allgemeinen nicht exakt eingehalten werden. Daher sollen die kritischen Werte so gewählt werden, dass $\tilde{\alpha}$ (exaktes Signifikanzniveau) unter der Nebenbedingung $\tilde{\alpha} \leq \alpha$ maximal wird.

Somit ergibt sich:

- Kritischer Bereich: $\{0,..., c\}$
- wobei c der größte Wert ist für den gilt:

$$\sum_{k=0}^{c} \mathrm{B}(k\,|\,p_0,n) = \sum_{k=0}^{c} \binom{n}{k} \cdot p_0^{\,k}(1 - p_0)^{n-k} = \tilde{\alpha} \leq \alpha$$

- Verwerfe die Nullhypothese, falls $X \leq c$.

Für das Ausführungsbeispiel gemäß Fig. 10 ergeben sich dann die folgende Werte für die Wahrscheinlichkeitsverteilung:

| Treffer | Wahrscheinlichkeit | kumulierte Wahrscheinlichkeit |
|---|---|---|
| 0 | 0,0078125 | 0,0078125 |
| 1 | 0,0546875 | 0,0625 |
| 2 | 0,1640625 | 0,2265625 |
| 3 | 0,2734375 | 0,5 |
| 4 | 0,2734375 | 0,7734375 |
| 5 | 0,1640625 | 0,9375 |
| 6 | 0,0546875 | 0,9921875 |
| 7 | 0,0078125 | 1 |

Somit kann der kritische Wert $c$ mit einem Signifikanzniveau von $\alpha = 0,1$ berechnet werden. Dies führt gemäß voranstehender Tabelle zu einem kritischen Bereich $c \leq 1$.

Es ergibt sich schließlich: $X = 1 \leq 1 = c$

Daher wird die die Nullhypothese für die in Fig. 10 abgebildete Stichprobe bedingt durch den "nur" einen Treffer in Form von Punkt 23 abgelehnt. Dies führt zu dem Schluss, dass die Fahrweise des Fahrzeugführers, dessen sieben Fahrten in Fig. 10 illustriert sind, insgesamt als verbesserungswürdig qualifiziert wird. Wäre die Nullhypothese nicht abgelehnt worden, so wäre der Fahrzeugführer bzw. dessen Fahrweise als nicht verbesserungswürdig einzustufen.

Zur Bereitstellung eines automatischen und computerimplementierten Bewertungsverfahrens gemäß einem Ausführungsbeispiel der Erfindung, insbesondere gemäß Fig. 10, könnten folgende Schritte implementiert werden:

- Ermittlung und Sammlung von Parameterdaten in Bezug auf Gaspedalstellung und Kraftstoffverbrauch von Fahrzeugführern
- Berechnung und Festlegung von Schwellwerten
- Klassifizierung von Kraftstoffverbrauch und Gaspedalstellung der Fahrzeugführer für jede Fahrt/Dienstschicht in Abhängigkeit von den zuvor festgelegten Schwellwerten
- Durchführung eines Binomialtests für jeden Fahrzeugführer in Bezug auf dessen klassifizierten Fahrten/Dienstschichten
- Bewertung der Fahrzeugführer als verbesserungswürdig oder als nicht verbesserungswürdig basierend auf dem Ergebnis des Binomialtest

Hinsichtlich weiterer vorteilhafter Ausgestaltungen des erfindungsgemäßen Verfahrens und des erfindungsgemäßen Systems sowie des erfindungsgemäßen Computerprogramms wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der Erfindung lediglich zur Erörterung der beanspruchten Lehre dienen, diese jedoch nicht auf die Ausführungsbeispiele einschränken.

**Bezugszeichenliste**

1    Detektionseinrichtung
2    Speichereinheit (intern)
3    Speichereinheit (extern)
4    zentraler Rechner
5    Recheneinheit
6    Recheneinheit (extern)
7    Anzeige

8 erste Kurve
9 zweite Kurve
10 dritte Kurve
11 vierte Kurve
12 fünfte Kurve
13 sechste Kurve
14 Schwellwert (Kraftstoffverbrauch)
15 Schwellwert (Gaspedalstellung)
16 Schwellwertlinie (Kraftstoffverbrauch)
17 Schwellwertlinie (Gaspedalstellung)
18 Bereich
19 Bereich
20 Bereich
21 Bereich
22 Punkte
23 Punkt
A Treffer-Bereich
B Kein-Treffer-Bereich

**Patentansprüche**

1. Verfahren zur Bewertung der Fahrweise eines Fahrzeugführers mit einem Kraftfahrzeug, insbesondere im öffentlichen Nahverkehr bzw. im innerstädtischen Verkehr, vorzugsweise zur Anwendung bei Fahrzeugflotten,
wobei die Fahrweise beschreibende Parameter ermittelt werden,
wobei als Parameter der Kraftstoffverbrauch über den Zeitverlauf hinweg ermittelt wird,
wobei als weiterer Parameter die Stellung des Gaspedals über den Zeitverlauf hinweg ermittelt wird,
wobei aus den ermittelten Parametern fahrzeugführerspezifische Kennwerte für eine Fahrt des Fahrzeugführers abgeleitet bzw. berechnet werden,
wobei die fahrzeugführerspezifischen Kennwerte mit vordefinierten Schwellwerten verglichen werden, und
wobei aus dem Vergleich der fahrzeugführerspezifischen Kennwerte mit den Schwellwerten auf die Fahrweise des Fahrzeugführers für die Fahrt geschlossen wird,
**dadurch gekennzeichnet, dass** zur Ermittlung der Parameter bzw. zur Berechnung der Kennwerte aus den ermittelten Parametern nur vordefinierte Fahrtabschnitte der Fahrt berücksichtigt werden.

2. Verfahren nach Anspruch 1, **dadurch gekennzeichnet, dass** der ermittelte Kraftstoffverbrauch und die ermittelte Stellung des Gaspedals bzw. die daraus abgeleiteten Kennwerte in Beziehung zueinander gesetzt werden.

3. Verfahren nach Anspruch 1 oder 2, **dadurch gekennzeichnet, dass** die vordefinierten Fahrtabschnitte eine Fahrtabschnittsdauer von höchstens 15 Minuten aufweisen, vorzugsweise von höchstens 5 Minuten, besonders vorzugsweise von höchstens 2 Minuten, ganz besonders vorzugsweise von höchstens 1 Minute aufweisen.

4. Verfahren nach einem der Ansprüche 1 bis 3, **dadurch gekennzeichnet, dass** die Fahrt eine Fahrzeit von mindestens 30 Minuten, vorzugsweise von mindestens 1 Stunde aufweist.

5. Verfahren nach einem der Ansprüche 1 bis 4, **dadurch gekennzeichnet, dass** als fahrzeugführerspezifischer Kennwert betreffend den Kraftstoffverbrauch der durchschnittliche Kraftstoffverbauch des Fahrzeugführers für eine bzw. die Fahrt berechnet wird.

6. Verfahren nach einem der Ansprüche 1 bis 5, **dadurch gekennzeichnet, dass** als fahrzeugführerspezifischer Kennwert betreffend die Gaspedalstellung die Häufigkeit, vorzugsweise die relative Häufigkeit, einer vorgebbaren Betätigungsstärke des Gaspedals berechnet wird, insbesondere einer vorgebbaren Mindestbetätigungsstärke des Gaspedals, wobei die Mindestbetätigungsstärke vorzugsweise im Bereich von einer 50 bis 100-prozentigen Betätigung des Gaspedals, besonders vorzugsweise im Bereich von einer 50 bis 75-prozentigen Betätigung des Gaspedals, ganz besonders vorzugsweise im Bereich von einer 50 bis 60-prozentigen Betätigung des Gaspedals, liegt.

7. Verfahren nach einem der Ansprüche 1 bis 6, **dadurch gekennzeichnet, dass** als Schwellwert betreffend den Kraftstoffverbrauch der Durchschnitt der durchschnittlichen Kraftverstoffverbrauchswerte einer vorgebbaren Menge von Fahrzeugführern berechnet bzw. festgelegt wird, vorzugsweise der Durchschnitt der unterhalb des 70%-Quantils liegenden Kraftstoffverbrauchswerte der Fahrzeugführer, besonders vorzugsweise der Durchschnitt der unterhalb des 60%-Quantils liegenden Kraftstoffverbrauchswerte der Fahrzeugführer, ganz besonders vorzugsweise der Durchschnitt der unterhalb des 50%-Quantils liegenden Kraftstoffverbrauchswerte der Fahrzeugführer.

8. Verfahren nach Anspruch 7, **dadurch gekennzeichnet, dass** als Schwellwert betreffend die Gaspedalstellung der Durchschnitt der zu den durchschnittlichen Kraftstoffverbrauchswerten der vorgebbaren Menge von Fahrzeugführern gehörenden, vorzugsweise relativen, Häufigkeiten einer vorgebbaren Betätigungsstärke des Gaspedals berechnet bzw. festgelegt wird, insbesondere der Durchschnitt der relativen Häufigkeiten einer vorgebbaren Mindestbetätigungsstärke des Gaspedals, wobei die Mindestbetätigungsstärke vorzugsweise im Bereich von einer 50 bis 100-prozentigen Betätigung des Gaspedals, besonders vorzugsweise im Bereich von einer 50 bis 75-prozentigen Betätigung des Gaspedals, ganz besonders vorzugsweise im Bereich von einer 50 bis 60-prozentigen Betätigung des Gaspedals, liegt.

9. Verfahren nach einem der Ansprüche 1 bis 8, **dadurch gekennzeichnet, dass** anhand des Vergleichs der Kennwerte mit den entsprechenden Schwellwerten die Fahrweise für die Fahrt bzw. für eine Fahrt entweder als verbesserungswürdig oder als nicht verbesserungswürdig klassifiziert wird, und/oder
dass die Parameter für mehrere Fahrten des Fahrzeugführers ermittelt werden, wobei für jede Fahrt ein fahrzeugführerspezifischer Kennwert betreffend den Kraftstoffverbrauch und ein fahrzeugführerspezifischer Kennwert betreffend die Gaspedalstellung abgleitet bzw. berechnet wird.

10. Verfahren nach einem der Ansprüche 1 bis 9, **dadurch gekennzeichnet, dass** eine, vorzugsweise dichotome, Klassifizierung mehrerer Fahrten des Fahrzeugführers mittels eines Hypothesentests, insbesondere mittels eines Binomialtests, überprüft wird, wobei aus der Überprüfung auf die Bewertung der Fahrweise des Fahrzeugführers geschlossen wird.

11. Verfahren nach Anspruch 10, **dadurch gekennzeichnet, dass** mit dem Hypothesentest ermittelt wird, ob der Fahrzeugführer mit einer Wahrscheinlichkeit $p \geq 0{,}5$ eine Fahrt mit einer nicht verbesserungswürdigen Fahrweise fährt.

12. Verfahren nach einem der Ansprüche 1 bis 11, **dadurch gekennzeichnet, dass** die Schwellwerte neu berechnet werden falls die Fahrweise eines vorgebbaren Anteils der Fahrzeugführer als nicht verbesserungswürdig bewertet wird.

13. System zur Bewertung der Fahrweise eines Fahrzeugführers mit einem Kraftfahrzeug, insbesondere im öffentlichen Nahverkehr bzw. im innerstädtischen Verkehr, vorzugsweise zur Anwendung bei Fahrzeugflotten, insbesondere zur Durchführung eines Verfahrens nach einem der Ansprüche 1 bis 12, umfassend eine in dem Kraftfahrzeug angeordnete Detektionseinrichtung zur Ermittlung von die Fahrweise beschreibenden Parametern und umfassend eine Bewertungseinrichtung zur Bewertung der Fahrweise des Fahrzeugführers,
wobei die Detektionseinrichtung Mittel zur Ermittlung des Kraftstoffverbrauchs über den Zeitverlauf hinweg aufweist,
wobei die Detektionseinrichtung des Weiteren Mittel zur Ermittlung der Stellung des Gaspedals über den Zeitverlauf hinweg aufweist,
wobei die Bewertungseinrichtung derart angepasst ist, dass sie aus den ermittelten Parametern fahrzeugführerspezifische Kennwerte für eine Fahrt des Fahrzeugführers berechnet, dass sie die fahrzeugführerspezifischen Kennwerte mit vordefinierten Schwellwerten vergleicht, und dass sie aus dem Vergleich der fahrzeugführerspezifischen Kennwerte mit den Schwellwerten auf die Fahrweise des Fahrzeugführers für die Fahrt schließt, und
wobei zur Ermittlung der Parameter bzw. zur Berechnung der Kennwerte aus den ermittelten Parametern nur vordefinierte Fahrtabschnitte der Fahrt berücksichtigt werden.

14. Computerprogramm mit Programmcode zur Durchführung eines Verfahrens nach einem der Ansprüche 1 bis 12, wenn das Computerprogramm in einem Computer ausgeführt wird.

**Claims**

1. Method for evaluating the driving manner of a vehicle driver with a motor vehicle, in particular in public transport or in urban traffic, preferably for use in vehicle fleets,
wherein parameters which describe the driving manner are established,
wherein the fuel consumption over the period of time is established as a parameter,

wherein the position of the accelerator pedal over the time period is established as an additional parameter, wherein vehicle-driver-specific characteristic values for a journey of the vehicle driver are derived or calculated from the established parameters,

wherein the vehicle-driver-specific characteristic values are compared with predefined threshold values, and

wherein, from the comparison of the vehicle-driver-specific characteristic values with the threshold values, conclusions are drawn relating to the driving manner of the vehicle driver for the journey,

**characterised in that**, in order to establish the parameters or to calculate the characteristic values from the established parameters, only predefined journey portions of the journey are taken into account.

2. Method according to claim 1, **characterised in that** the established fuel consumption and the established position of the accelerator pedal or the characteristic values derived therefrom are correlated with each other.

3. Method according to claim 1 or 2, **characterised in that** the predefined journey portions have a journey portion duration of a maximum of 15 minutes, preferably a maximum of 5 minutes, in a particularly preferred manner a maximum of 2 minutes, in a very particularly preferred manner a maximum of 1 minute.

4. Method according to any one of claims 1 to 3, **characterised in that** the journey has a travel time of at least 30 minutes, preferably at least 1 hour.

5. Method according to any one of claims 1 to 4, **characterised in that** the average fuel consumption of the vehicle driver for a or the journey is calculated as a vehicle-driver-specific characteristic value relating to the fuel consumption.

6. Method according to any one of claims 1 to 5, **characterised in that** the frequency, preferably the relative frequency, of a predeterminable actuation strength of the accelerator pedal is calculated as a vehicle-driver-specific characteristic value relating to the accelerator pedal position, in particular a predeterminable minimum actuation strength of the accelerator pedal, wherein the minimum actuation strength is preferably in the range from a 50 to 100 percent actuation of the accelerator pedal, in a particularly preferred manner in the range from a 50 to 75 percent actuation of the accelerator pedal, very particularly preferably in the range from a 50 to 60 percent actuation of the accelerator pedal.

7. Method according to any one of claims 1 to 6, **characterised in that** the average of the average fuel consumption values of a predeterminable quantity of vehicle drivers is calculated or determined as a threshold value relating to the fuel consumption, preferably the average of the fuel consumption values of the vehicle drivers below the 70% quantile, particularly preferably the average of the fuel consumption values of the vehicle drivers below the 60% quantile, very particularly preferably the average of the fuel consumption values of the vehicle drivers below the 50% quantile.

8. Method according to claim 7, **characterised in that** the average of the preferably relative frequencies of a predeterminable actuation strength of the accelerator pedal belonging to the average fuel consumption values of the predeterminable quantity of vehicle drivers is calculated or determined as a threshold value relating to the accelerator pedal position, in particular the average of the relative frequencies of a predeterminable minimum actuation strength of the accelerator pedal, wherein the minimum actuation strength is preferably in the range from a 50 to 100 percent actuation of the accelerator pedal, in a particularly preferred manner in the range from a 50 to 75 percent actuation of the accelerator pedal, very particularly preferably in the range from a 50 to 60 percent actuation of the accelerator pedal.

9. Method according to any one of claims 1 to 8, **characterised in that**, with reference to the comparison of the characteristic values with the corresponding threshold values, the driving manner for the journey or for a journey is classified either as being in need of improvement or as not being in need of improvement and/or

**in that** the parameters for several journeys of the vehicle driver are established, wherein for each journey a vehicle-driver-specific characteristic value relating to the fuel consumption and a vehicle-driver-specific characteristic value relating to the accelerator pedal position is derived or calculated.

10. Method according to any one of claim 1 to 9, **characterised in that** a preferably dichotomous classification of several journeys of the vehicle driver is verified by means of a hypothesis test, in particular by means of a binomial test, wherein from the verification a conclusion is drawn relating to the evaluation of the driving manner of the vehicle driver.

11. Method according to claim 10, **characterised in that** using the hypothesis test it is established with a probability p ≥ 0.5 whether the vehicle driver drives a journey with a driving manner which is not in need of improvement.

12. Method according to any one of claims 1 to 11, **characterised in that** the threshold values are calculated again if the driving manner of a predeterminable proportion of the vehicle drivers is evaluated as not being in need of improvement.

13. System for evaluating the driving manner of a vehicle driver with a motor vehicle, in particular in public transport or in urban traffic, preferably for use in vehicle fleets, in particular for carrying out a method according to any one of claims 1 to 12, comprising a detection device arranged in the motor vehicle for establishing parameters which describe the driving manner and comprising an evaluation device for evaluating the driving manner of the vehicle driver,
wherein the detection device has means for establishing the fuel consumption over the time period,
wherein the detection device further has means for establishing the position of the accelerator pedal over the time period,
wherein the evaluation device is adapted in such a manner that it calculates from the established parameters vehicle-driver-specific characteristic values for a journey of the vehicle driver, in that it compares the vehicle-driver-specific characteristic values with predefined threshold values, and in that, from the comparison of the vehicle-driver-specific characteristic values with the threshold values, it draws conclusions relating to the driving manner of the vehicle driver for the journey, and
wherein, in order to establish the parameters or to calculate the characteristic values from the established parameters, only predefined journey portions of the journey are taken into account.

14. Computer programme having programme code for carrying out a method according to any one of claims 1 to 12 when the computer programme is carried out on a computer.

**Revendications**

1. Procédé d'évaluation de la manière de conduire d'un conducteur de véhicule avec un véhicule automobile, en particulier dans le trafic local public ou respectivement dans le trafic urbain, de préférence en vue de l'utilisation dans le cas de flottes de véhicules,
des paramètres décrivant la manière de conduire étant déterminés,
la consommation de carburant dans le temps étant déterminée en tant que paramètre,
la position de la pédale d'accélérateur dans le temps étant déterminée en tant que paramètre supplémentaire,
des valeurs caractéristiques spécifiques au conducteur du véhicule pour un trajet du conducteur de véhicule étant dérivées ou respectivement calculées à partir des paramètres déterminés,
les valeurs caractéristiques spécifiques au conducteur du véhicule étant comparées à des valeurs de seuil prédéfinies, et
des conclusions étant tirées sur la manière de conduire du conducteur de véhicule pour le trajet à partir de la comparaison des valeurs caractéristiques spécifiques au conducteur du véhicule avec les valeurs de seuil,
**caractérisé en ce que**, pour la détermination des paramètres ou respectivement pour le calcul des valeurs caractéristiques à partir des paramètres déterminés, seuls des tronçons de trajet prédéfinis du trajet sont pris en considération.

2. Procédé selon la revendication 1, **caractérisé en ce que** la consommation de carburant déterminée et la position déterminée de la pédale d'accélérateur ou respectivement les valeurs caractéristiques qui en sont dérivées sont mises en relations les unes avec les autres.

3. Procédé selon la revendication 1 ou 2, **caractérisé en ce que** les tronçons de trajet prédéfinis comportent une durée de tronçons de trajet de 15 minutes maximum, de préférence de 5 minutes maximum, de façon particulièrement préférée de 2 minutes maximum, de façon tout particulièrement préférée de 1 minute maximum.

4. Procédé selon l'une des revendications 1 à 3, **caractérisé en ce que** le trajet comporte une durée de trajet d'au moins 30 minutes, de préférence d'au moins 1 heure.

5. Procédé selon l'une des revendications 1 à 4, **caractérisé en ce que**, en tant que valeur caractéristique spécifique au conducteur du véhicule concernant la consommation de carburant, la consommation de carburant moyenne du conducteur de véhicule est calculée pour un ou respectivement pour le trajet.

**6.** Procédé selon l'une des revendications 1 à 5, **caractérisé en ce que**, en tant que valeur caractéristique spécifique au conducteur du véhicule concernant la position de la pédale d'accélérateur, la fréquence, de préférence la fréquence relative, d'une force d'actionnement spécifiable au préalable de la pédale d'accélérateur est calculée, en particulier d'une force d'actionnement minimale spécifiable au préalable de la pédale d'accélérateur, la force d'actionnement minimale se situant de préférence dans la plage d'un actionnement à 50 à 100 pour cent de la pédale d'accélérateur, en particulier de préférence dans la plage d'un actionnement à 50 à 75 pour cent de la pédale d'accélérateur, de façon tout particulièrement préférée dans la plage d'un actionnement à 50 à 60 pour cent de la pédale d'accélérateur.

**7.** Procédé selon l'une des revendications 1 à 6, **caractérisé en ce que**, en tant que valeur de seuil concernant la consommation de carburant, la moyenne des valeurs moyennes de consommation de carburant d'une quantité spécifiable au préalable de conducteurs de véhicule est calculée ou respectivement stipulée, de préférence la moyenne des valeurs de consommation de carburant des conducteurs de véhicule inférieures au quantile de 70 %, de façon particulièrement préférée la moyenne des valeurs de consommation de carburant des conducteurs de véhicule inférieures au quantile de 60 %, de façon tout particulièrement préférée la moyenne des valeurs de consommation de carburant des conducteurs de véhicule inférieures au quantile de 50 %.

**8.** Procédé selon la revendication 7, **caractérisé en ce que**, en tant que valeur de seuil concernant la position de la pédale d'accélérateur, la moyenne des fréquences, de préférence relatives, d'une force d'actionnement spécifiable au préalable de la pédale d'accélérateur appartenant aux valeurs moyennes de consommation de carburant de la quantité spécifiable au préalable de conducteurs de véhicule est calculée ou respectivement stipulée, en particulier la moyenne des fréquences relatives d'une force d'actionnement minimale spécifiable au préalable de la pédale d'accélérateur, la force d'actionnement minimale se situant de préférence dans la plage d'un actionnement à 50 à 100 pour cent de la pédale d'accélérateur, en particulier de préférence dans la plage d'un actionnement à 50 à 75 pour cent de la pédale d'accélérateur, de façon tout particulièrement préférée dans la plage d'un actionnement à 50 à 60 pour cent de la pédale d'accélérateur.

**9.** Procédé selon l'une des revendications 1 à 8, **caractérisé en ce que**, à l'aide de la comparaison des valeurs caractéristiques avec les valeurs de seuil correspondantes, la manière de conduire pour le trajet ou respectivement pour un trajet est classée soit comme perfectible, soit comme non perfectible, et/ou **en ce que** les paramètres sont déterminés pour plusieurs trajets du conducteur de véhicule, une valeur caractéristique spécifique au conducteur du véhicule concernant la consommation de carburant et une valeur caractéristique spécifique au conducteur du conducteur de véhicule concernant la position de la pédale d'accélérateur étant dérivées ou respectivement calculées pour chaque trajet.

**10.** Procédé selon l'une des revendications 1 à 9, **caractérisé en ce qu'**une classification, de préférence dichotomique, de plusieurs trajets du conducteur de véhicule est contrôlée au moyen d'un test d'hypothèse, en particulier au moyen d'un test binomial, des conclusions pouvant, à partir du contrôle, être tirées sur l'évaluation de la manière de conduire du conducteur de véhicule.

**11.** Procédé selon la revendication 10, **caractérisé en ce que**, avec le test d'hypothèse, il est déterminé si le conducteur de véhicule parcourt, avec une probabilité $p \geq 0,5$, un trajet avec une manière de conduire non perfectible.

**12.** Procédé selon l'une des revendications 1 à 11, **caractérisé en ce que** les valeurs de seuil sont recalculées au cas où la manière de conduire d'une fraction spécifiable au préalable des conducteurs de véhicule est évaluée comme non perfectible.

**13.** Système d'évaluation de la manière de conduire d'un conducteur de véhicule avec un véhicule automobile, en particulier dans le trafic local public ou respectivement dans le trafic urbain, de préférence en vue de l'utilisation dans le cas de flottes de véhicules, en particulier pour la réalisation d'un procédé selon l'une des revendications 1 à 12, comprenant un système de détection disposé dans le véhicule automobile et destiné à la détermination de paramètres décrivant la manière de conduire, et comprenant un système d'évaluation destiné à l'évaluation de la manière de conduire du conducteur de véhicule,

le système de détection comprenant des moyens destinés à la détermination de la consommation de carburant dans le temps,

le système de détection comportant en outre des moyens destinés à la détermination de la position de la pédale d'accélérateur dans le temps,

le système de détection étant adapté de telle sorte que, à partir des paramètres déterminés, il calcule des valeurs caractéristiques spécifiques au conducteur de véhicule pour un trajet du conducteur de véhicule, de telle sorte qu'il compare les valeurs caractéristiques spécifiques au conducteur de véhicule avec des valeurs de seuil prédéfinies, et de telle sorte que, à partir de la comparaison des valeurs caractéristiques spécifiques au conducteur de véhicule avec les valeurs de seuil, il tire des conclusions sur la manière de conduire du conducteur de véhicule pour le trajet, seuls des tronçons de conduite prédéfinis du trajet étant pris en considération pour la détermination des paramètres ou respectivement pour le calcul des valeurs caractéristiques à partir des paramètres déterminés.

14. Programme informatique avec code de programme pour la réalisation d'un procédé selon l'une des revendications 1 à 12 si le programme informatique est réalisé dans un ordinateur.

Fig. 1

Fig. 2

Fig. 3

Fig. 4

Fig. 5

Fig. 6

Fig. 7

Fig. 8a

Kraftstoffverbrauch: 8,521l/h

rel. Häufigkeit

Stellung [%]

Fig. 8b

Kraftstoffverbrauch:12,303 l/h

rel. Häufigkeit

Stellung [%]

Fig. 8c

Kraftstoffverbrauch:10,755 l/h

rel. Häufigkeit

Stellung [%]

Fig. 8a

Fig. 8b

Fig. 8c

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10001261 A1
- DE 102004002495 A1
- DE 102004036373 A1
- WO 0151891 A1
- DE 19843395 A1
- EP 2127953 A1
- FR 3009261 A1
- EP 2343208 A1
- EP 2472490 A1
- US 20140162219 A1
- US 20130046449 A1